# EUROPEAN PATENT APPLICATION

(11) **EP 1 927 430 A2**
(43) Date of publication of application: **04.06.2008**
(21) Application number: 07120106.5
(22) Date of filing: 06.11.2007
(51) Int. Cl.: B23Q 7/04

(54) **Turning unit**

(30) Priority: 06.11.2006 IT BO20060092 U
(71) Applicant: HBSE S.r.l., 40129 Bologna (IT)
(72) Inventor: Zini, Ermanno, 48018 Faenza (IT)
(74) Representative: Jorio, Paolo

(57) **Abstract**

A turning unit consists of a lathe (2) and a magazine (3) provided with a table (13) for a plurality of workpieces (4) and/or tools (5) used on the lathe (2); the table (13) being separate and independent from a bed (6) of the lathe (2) and having at least one guideway (18) suitable to support a handling device (19) for carrying the workpieces (4) and/or the tools (5) between the lathe (2) and the magazine (3).

## Description

The present invention relates to a turning unit.

In particular, the present invention relates to a turning unit of the type comprising a lathe that, in turn, comprises a bed, a first supporting device mounted on the bed to support at least one workpiece, and a second supporting device mounted on the bed to support at least one tool used on the lathe; and a magazine comprising, in turn, a table for a plurality of workpieces and tools, and a handling device to transfer the workpieces and tools between the magazine and the relative supporting devices.

The handling device generally comprises a gripping and carrying assembly that moves along a gantry frame consisting of two vertical uprights, extending upwards from the bed of the lathe and, respectively, from the table of the magazine, and bearing a horizontal crosspiece joined to the ends thereof.

The known turning units of the type described above have some drawbacks mainly in connection with the fact that the integration of the lathe in the magazine and the presence of the aforesaid gantry frame make such turning units relatively complex and expensive, relatively bulky, and not very versatile.

It is an object of the present invention to provide a turning unit that overcomes the drawbacks described above and that is simple and cheap to produce.

According to the present invention there is provided a turning unit as claimed in claims 1 to 8.

The present invention also relates to a magazine for lathes.

According to the present invention there is provided a magazine for lathes as claimed in claims 9 to 16.

The present invention will now be described with reference to the attached drawings, which illustrate a non-limiting embodiment thereof, in which:
figure 1 is a schematic perspective view of a preferred embodiment of the turning unit according to the present invention; and
figure 2 is a schematic perspective view of a detail of the turning unit in figure 1.

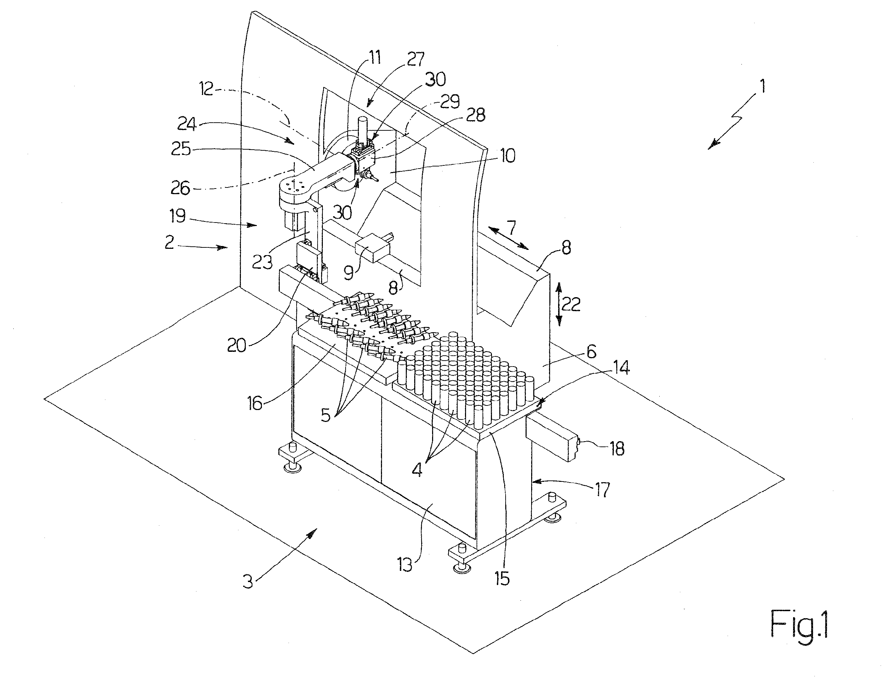

With reference to figure 1, number 1 indicates as a whole a turning unit comprising a lathe 2 and a magazine 3 for a plurality of workpieces 4 and tools 5 used on the lathe 2.

The lathe 2 comprises an elongated bed 6, which extends in a substantially horizontal direction 7, is substantially U-shaped, and is provided with two lateral longitudinal guiding members 8, which are parallel to one another and to the direction 7, and support a device 9 for gripping and carrying at least one tool 5.

The lathe 2 also comprises a supporting head 10, which is fixed to one end of the bed 6, extends upwards from said bed 6, and supports a chuck 11, which is mounted on the head 10 so as to rotate, in relation to the bed 6, about its own longitudinal axis 12 parallel to the direction 7, and is provided with gripping and chucking members (known and not shown) for rotating at least one workpiece 4 about the axis 12.

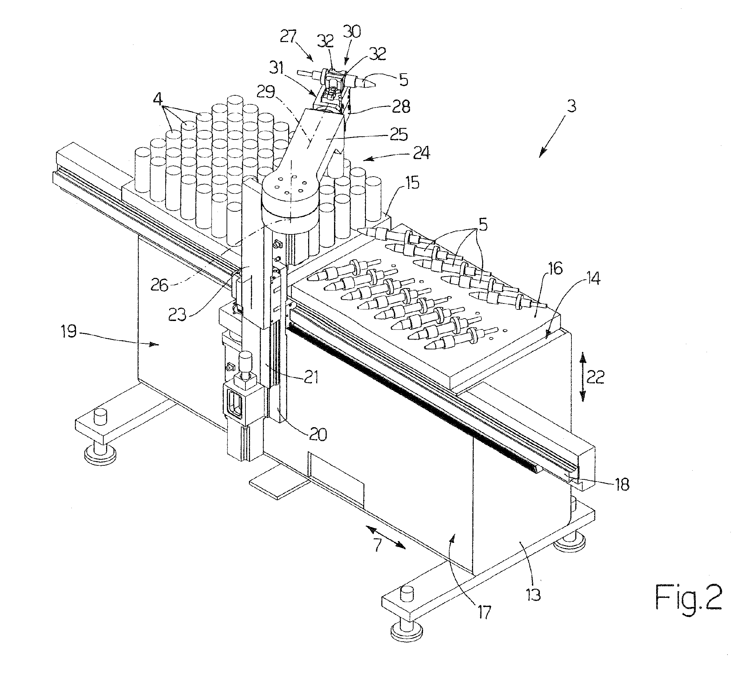

As illustrated in figures 1 and 2, the magazine 3 comprises an elongated table 13, which is substantially parallelepiped in shape, is anchored to the floor so that it is substantially parallel to the bed 6 and to the direction 7, and is completely separate and independent from the bed 6. In other words, table 13 is not provided with any devices for coupling it to the bed 6.

According to an alternative not shown embodiment, the table 13 is separate and independent from the bed 6 and, once it has been arranged in proximity of the lathe 2, it is held in the correct position in relation to the bed 6 by means of a positioning device leading from the table 13 and/or from the bed 6 and suitable to releasably join the table 13 and the bed 6 to each other.

The table 13 is limited superiorly by a flat and substantially horizontal face 14 supporting a tray 15 for a plurality of workpieces 4 and a tray 16 for a plurality of tools 5, and is limited laterally by a flat and substantially vertical face 17, which faces the lathe 2, and is provided with a guideway 18 obtained on the face 17 parallel to the direction 7.

The guideway 18 supports a handling device 19 comprising a horizontal slide 20, which is coupled in a known way to the guideway 18 in order to move in a straight line along the guideway 18 in the direction 7, and is provided with a guideway 21 obtained on the slide 20 parallel to a direction 22 that is substantially vertical and transversal to the direction 7.

The guideway 21 supports a vertical slide 23, which is coupled in a known way to the guideway 21 in order to move in a straight line along said guideway 21 in the direction 22, and bears a connected gripping and carrying unit 24 comprising a supporting arm 25 rotatingly coupled to the slide 23 so as to rotate, in relation to the slide 23, about an axis of rotation 26 parallel to the direction 22.

The arm 25 supports a gripping and carrying device 27 comprising a box-shaped body 28, which is substantially parallelepiped in shape, and is rotatingly coupled to a free end of the arm 25 so as to rotate, in relation to the arm 25, about a horizontal axis of rotation 29, which is substantially perpendicular to the axis 26, and the orientation of which depends on the angular position of the arm 25 about the axis 26.

The body 28 supports two gripping and carrying members 30, which are mounted on two opposite faces 31 of the body 28, and each of which comprises two respective jaws 32 that are slidingly coupled to the body 28 so as to move one in relation to the other parallel to the axis 29 from and towards a chucking position of at least one workpiece 4 or tool 5.

In use, by combining the movement of the slide 20 along the guideway 18 in the direction 7 with the movement of the slide 23 along the guideway 21 in the direction 22, with the rotation of the supporting arm 25 about the axis 26, and with the rotation of the box-shaped body 28 about the axis 29, the handling device 19 carries the workpieces 4 and the tools 5 between the lathe 2 and the magazine 3.

Since the lathe 2 and the magazine 3 are separate and independent from one another, the turning unit 1 offers some advantages, mainly in connection with the fact that:
the structure of the magazine 3 is relatively simple and cheap and it has relatively reduced overall dimensions; and
the handling device 19 is relatively simple and cheap to program and is integrated in the table 13 and, thus, in the loading/unloading area of the workpieces 4 and tools 5 defined by the trays 15 and 16.

## Claims

1. Turning unit comprising a lathe (2), in turn comprising a bed (6), first supporting means (11) mounted on the bed (6) to support at least one workpiece (4), and second supporting means (9) mounted on the bed (6) to support at least one tool (5); and a magazine (3), in turn comprising a table (13) for a plurality of workpieces (4) and/or tools (5), and a handling device (19) to carry said workpieces (4) and/or tools (5) between the magazine (3) and said first and/or second supporting means (11, 9); and **characterized in that** the table (13) of the magazine (3) is separate and independent from the bed (6) of the lathe (2), and is provided with at least a first guideway (18), which extends in a first specific direction (7), and supports said handling device (19).

2. Turning unit according to claim 1, in which the table (13) of the magazine (3) is completely separate and independent from the bed (6) of the lathe (2).

3. Turning unit according to claim 1 and also comprising positioning means mounted on the lathe (2) and/or on the magazine (3) and movable from and towards a coupling position, in which the table (13) of the magazine (3) and the bed (6) of the lathe (2) are joined together so as to be correctly positioned in relation to each other.

4. Turning unit according to any of the previous claims, in which the handling device (19) comprises a first slide (20), which is slidingly coupled to said first guideway (18), and is provided with a second guideway (21) extending in a second direction (22) substantially transversal to the first direction (7), a second slide (23) slidingly coupled to the second guideway (21), and a gripping and carrying unit (24) mounted on said second slide (23).

5. Turning unit according to claim 4, in which the gripping and carrying device (24) comprises at least one supporting arm (25) rotatingly coupled to said second slide (23) in order to rotate about a first axis of rotation (26), and a gripping and carrying device (27) mounted on said supporting arm (25).

6. Turning unit according to claim 5, in which the gripping and carrying device (27) is rotatingly coupled to the supporting arm (25) in order to rotate about a second axis of rotation (29) substantially perpendicular to said first axis of rotation (26).

7. Turning unit according to claim 5 or 6, in which the gripping and carrying device (27) comprises two gripping and carrying members (30) arranged opposite one another; each gripping and carrying member (30) being a gripper comprising two jaws (32) each movable in relation to the other between a chucking position and a releasing position of at least one workpiece (4) or tool (5).

8. Turning unit according to any of the claims from 4 to 7, in which one of said first and second directions (7, 22) is substantially horizontal and the other substantially vertical.

9. Magazine for a lathe (2) comprising a bed (6), first supporting means (11) mounted on the bed (6) to support at least one workpiece (4), and second supporting means (9) mounted on the bed (6) to support at least one tool (5); the magazine (3) comprising a table (13) for a plurality of workpieces (4) and/or tools (5); and a handling device (19) for transferring said workpieces (4) and/or tools (5) between the magazine (3) and said first and/or second supporting means (11, 9); and **characterized in that** the table (13) of the magazine (3) is separate and independent from the bed (6) of the lathe (2), and is provided with at least a first guideway (18), which extends in a first specific direction (7), and supports said handling device (19).

10. Magazine according to claim 9, in which the table (13) of the magazine (3) is completely separate and independent from the bed (6) of the lathe (2).

11. Magazine according to claim 9, in which the table (13) of the magazine (3) can be joined to the bed (6) of the lathe (2) in order to hold the table (13) of the magazine (3) and the bed (6) of the lathe (2) in the correct position in relation to one another.

12. Magazine according to any of the claims from 9 to 11, in which the handling device (19) comprises a first slide (20), which is slidingly coupled to said first guideway (18), and is provided with a second guideway (21) extending in a second direction (22) substantially transversal to the first direction (7), a second slide (23) slidingly coupled to the second guide (21), and a gripping and carrying unit (24) mounted on said second slide (23).

13. Magazine according to claim 12, in which the gripping and carrying unit (24) comprises at least one supporting arm (25) rotatingly coupled to said second slide (23) in order to rotate about a first axis of rotation (26), and a gripping and carrying device (27) mounted on said supporting arm (25).

14. Magazine according to claim 13, in which the gripping and carrying device (27) is rotatingly coupled to the supporting arm (25) in order to rotate about a second axis of rotation (29) substantially perpendicular to said first axis of rotation (26).

15. Magazine according to claim 13 or 14, in which the gripping and carrying device (27) comprises two gripping and carrying members (30) arranged opposite one another; each gripping and carrying member (30) being a gripper comprising two jaws (32) movable in relation to one another between a chucking position and a releasing position of at least one workpiece (4) or tool (5).

16. Magazine according to any of the claims from 12 to 15, in which one of said first and second directions (7, 22) is substantially horizontal and the other substantially vertical.
